# EUROPÄISCHE PATENTSCHRIFT

(11) **EP 2 066 898 B1**
(45) Veröffentlichungstag und Bekanntmachung des Hinweises auf die Patenterteilung: **02.02.2011**
(21) Anmeldenummer: 07787799.1
(22) Anmeldetag: 23.07.2007
(51) Int. Cl.: F02M 59/10, F02B 1/04

(54) **NOCKENWELLENTRIEB, INSBESONDERE FÜR EINE DIESELEINSPRITZPUMPE, MIT EINER HUBBEWEGLICH ANGETRIEBENEN LAUFROLLE**
OPERATION OF CAMSHAFTS, PARTICULARLY FOR AN INJECTION PUMP FOR DIESEL, HAVING A RUNNING PULLEY DRIVEN IN A LIFTING MANNER
ENTRAÎNEMENT DE L'ARBRE À CAME, EN PARTICULIER POUR UNE POMPE À INJECTION DIESEL, AVEC UN GALET DE ROULEMENT ENTRAÎNÉ DE MANIÈRE À POUVOIR SE SOULEVER

(30) Priorität: 14.09.2006 DE 102006043090
(43) Veröffentlichungstag der Anmeldung: 10.06.2009
(73) Patentinhaber: Robert Bosch GmbH, 70442 Stuttgart (DE)
(72) Erfinder: DUTT, Andreas, 70469 Stuttgart (DE); MEIER, Gerhard, 73614 Schorndorf (DE)
(86) Internationale Anmeldenummer: PCT/EP2007/057555
(87) Internationale Veröffentlichungsnummer: WO 2008/031663

(56) Entgegenhaltungen:
- EP-A- 0 266 149
- EP-A- 0 484 699
- EP-A- 1 013 779
- DE-A1- 10 011 206
- US-A- 5 934 236

## Beschreibung

Die vorliegende Erfindung betrifft einen Nockenwellentrieb, insbesondere für eine Dieseleinspritzpumpe, welche zur Erzeugung eines Hochdruckes für Dieselkraftstoffe zur Belieferung von Verbrennungskraftmaschinen eingesetzt wird.

### Stand der Technik

Aus der Patentschrift DE 35 46 930 C2 oder EP 0484699A1 ist ein Nockenwellentrieb bekannt, welcher eine Nockenwelle umfasst, die über die Kurbelwelle der Verbrennungskraftmaschine angetrieben wird. Die Nockenwelle weist einen Nocken auf, über den eine Druckrolle umfangsseitig der Nocke abwälzt. Dabei wird in der Druckrolle eine Hubbewegung erzeugt, welche die Druckrolle von der Nockenwellenlängsachse wegbewegt, und über der Rückseite der Nocke mittels des abnehmenden Radius die Druckrolle zur Nockenwellenlängsachse wieder hin bewegt. Somit entsteht eine kontinuierliche Hubbewegung der Druckrolle über der Drehbewegung der Nockenwelle, wobei die Druckrolle in einem Gleitstück aufgenommen ist, um die lineare Hubbewegung auszuführen. Über den so erzeugten Hub kann unter Verwendung einer Ventilanordnung der Kraftstoff verdichtet werden. Abhängig von der Ausführung der Dieseleinspritzpumpe und der vorgesehenen Drehzahl der Nockenwelle wird diese mit der Drehzahl der Kurbelwelle betrieben, welche bis zu 4.500 1/min und darüber beträgt. Damit ist das System zwischen der Nocke und der Druckrolle einer großen mechanischen Belastung ausgesetzt, welche durch die Dynamik der Dreh-Hubbewegung der Druckrolle verursacht wird.

Rückseitig am Gleitstück ist eine Druckfeder angeordnet, in welchem die Druckrolle aufgenommen ist und beaufschlagt die Druckrolle mit einer Rückhubkraft, so dass diese über dem gesamten Umfang der Nocke in Kontakt bleibt. Bei einer derartigen Anordnung eines Nockenwellentriebes einer Dieseleinspritzpumpe entsteht das Problem, dass aufgrund der großen Dynamik in der Bewegung der Druckrolle über der rotierenden Nocke die Rotation der Druckrolle nicht für jedes Winkelsegment über der Drehbewegung der Nockenwelle sichergestellt ist. Die Nocke der Nockenwelle kann in einen Rückhubabschnitt und in einen Arbeitshubabschnitt unterteilt werden, wobei die Hubbewegung der Druckrolle im Arbeitshubabschnitt den Kraftstoff verdichtet und im Rückhubabschnitt der Verdichterraum des Einspritzpumpe wieder mit Kraftstoff füllt. Über dem Arbeitshubabschnitt der Nocke können Kräfte von bis zu 10 kN auftreten, mit der die Druckrolle auf die Nocke drückt. Über den Rückhubabschnitt wirken diese Kräfte nicht, wobei lediglich die Druckfeder die Druckrolle an die Nocke drückt. Die Druckrolle muss jedoch für einen zuverlässigen Betrieb des Nockenwellentriebes über jedem Winkelsegment der Nocke an dieser anliegen, so dass die Druckrolle über der Umfangsfläche der Nocke abwälzt. Wird die Mindestkraft zum Andruck der Druckrolle an die Umfangsfläche der Nocke unterschritten, so ist die Rotationsbewegung der Druckrolle nicht mehr für jeden Abschnitt der Nocke garantiert. So kann die Rotationsbewegung der Druckrolle aussetzen, und die Druckrolle bleibt stehen. Dabei entsteht ein Schlupf zwischen der Druckrolle und der Umfangsfläche der Nocke, was zu einem Verschleiß des Nockenwellentriebes führt. Die Folge ist ein Ausfall des Nockenwellentriebes und damit ein Ausfall der Dieseleinspritzpumpe.

Es ist daher die Aufgabe der vorliegenden Erfindung, einen Nockenwellentrieb für eine Dieseleinspritzpumpe zu schaffen, welcher ein Abwälzen der Druckrolle über dem Umfang der Nocke über dem gesamten Drehzahlbereich der Nockenwelle sicherstellt.

### Offenbarung der Erfindung

Diese Aufgabe wird ausgehend von einem Nockenwellentrieb gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass die Umfangsfläche der Nocke einen Rückhubabschnitt aufweist, auf welchem die Druckrolle im Rückhub abwälzt und ferner einen Arbeitshubabschnitt aufweist, auf welchem die Druckrolle im Arbeitshub abwälzt, wobei die Umfangsfläche über dem Rückhubabschnitt der Nocke einen größeren Reibwert als über dem Arbeitshubabschnitt aufweist.

Die Erfindung bietet den Vorteil, dass ein vergrößerter Reibwert über dem Rückhubabschnitt der Umfangsfläche der Nocke einen möglichen Schlupf der Druckrolle über der Umfangsfläche im Bereich des Rückhubabschnittes vermeidet. Dabei ist über dem Arbeitshubabschnitt ein geringer Reibwert mit einer hohen Oberflächequalität der Umfangsfläche gewährleistet, um aufgrund der großen Druckkräfte keinen frühzeitigen Verschleiß zwischen der Druckrolle und der Umfangsfläche der Nocke hervorzurufen. Aufgrund der geringen Andruckkraft der Druckrolle auf die Umfangsfläche über dem Rückhubabschnitt ist die Reibung gemäß der vorliegenden Erfindung erhöht, was eine Rotationsbewegung der Druckrolle auch über diesen Abschnitt aufrecht erhält. Die erhöhte Rauheit über dem Rückhubabschnitt ist erfindungsgemäß gewünscht, wobei ein vorzeitiger Verschleiß aufgrund der erhöhten Rauheit der Oberfläche und dem damit erzielten größeren Reibwert insofern nicht eintritt, als die Druckkraft der Druckrolle auf den Rückhubabschnitt vergleichsweise gering ist.

Gemäß einer vorteilhaften Ausführungsform der jeweiligen Abschnitte über der Umfangsfläche der Nocke ist vorgesehen, dass die gemittelte Rautiefe R_{z} des Rückhubabschnittes wenigstens einen Wert von 2µm bis 8µm, vorzugsweise von 3µm bis 6µm und besonders bevorzugt von wenigstens 4µm aufweist. Die gemittelte Rautiefe R_{z} ist der Mittelwert aus Einzelrautiefen fünf aufeinanderfolgender Abschnitte über einem Rauheitsprofil. Die Extremwerte in jedem Messabschnitt werden addiert und die Summe der Spannweiten durch die Anzahl der Messabschnitte dividiert. Die sich so ergebende Rautiefe R_{z} beeinflusst den Reibwert der Umfangsfläche der Nocke, wobei eine große gemittelte Rautiefe R_{z} einen erhöhten Reibwert bewirkt.

Vorzugsweise umfasst der Materialanteil M_{R} des Rückhubabschnittes einen Wert von 5% bis 30%, vorzugsweise von 10% bis 25% und besonders bevorzugt nicht mehr als 20%. Je größer die gemittelte Rautiefe R_{z} einer Oberfläche ist, desto geringer ist der Materialanteil M_{R}. Der auch als Traganteil t_{P} bezeichnete Materialanteil M_{R} ist der Anteil der Auflagefläche über einer bestimmten Schnittlinie zu der betrachteten Gesamtfläche bezogen auf die Bezugsstrecke. Daher bewirkt ein geringer Materialanteil M_{R} eine große Reibung, so dass bei einem geringen Materialanteil M_{R} über dem Rückhubabschnitt ein Schlupf der Druckrolle verringert bzw. vermieden werden kann.

Hingegen ist vorgesehen, dass die gemittelte Rautiefe R_{z} des Arbeitshubabschnitts einen Wert von 0,1 µm bis 2.5µm, vorzugsweise von 0,5 µm bis 2,2µm und besonders bevorzugt von maximal 2µm aufweist. Der zugehörige Materialanteil M_{R} des Arbeitshubabschnittes weist einen Wert von 20% bis 95%, vorzugsweise von 50% bis 90% und besonders bevorzugt wenigstens 80% auf. Die geringe gemittelte Rautiefe R_{z} und der damit erreichte große Materialanteil M_{R} zwischen der Umfangsfläche über dem Arbeitshubabschnitt der Nocke und der Druckrolle führt zu einem geringen Verschleiß, da aufgrund der hohen wirkenden Kräfte und der großen Hertz'schen Pressungen im Arbeitshubabschnitt eine hohe Oberflächenqualität vorgesehen ist. Da ein Schlupf der Druckrolle über dem Arbeitshubabschnitt aufgrund der hohen Andruckkräfte praktisch ausgeschlossen ist, wirkt sich eine hohe Oberflächenqualität mit einer geringen gemittelten Rautiefe und einem hohen Materialanteil verschleißmindernd aus.

Gemäß eines vorteilhaften Ausführungsbeispiels der Erfindung ist vorgesehen, dass die Umfangsfläche der Nocke wenigstens teilweise eine mittels eines Schleifverfahrens hergestellte Oberfläche umfasst. Besonders bevorzugt umfasst die Umfangsfläche der Nocke wenigstens teilweise eine mittels eines Polierverfahrens hergestellte Oberfläche. Die polierte Oberfläche ist dabei auf den Bereich des Arbeitshubabschnittes begrenzt. Die Herstellung der Umfangsfläche der Nocke kann mittels eines Schleifverfahrens erfolgen, wobei zunächst die gesamte Umfangsfläche der Nocke geschliffen wird. Die erzielbare Oberflächenqualität mittels eines Schleifverfahrens ist prinzipiell geringer als die erreichbare Oberflächenqualität mit einem Polierverfahren. Wird die Nocke über der gesamten Umfangsfläche geschliffen und nur der Bereich des Arbeitshubabschnitts einer nachfolgenden Politur unterzogen, so bilden sich zwei Abschnitte über dem Umfang der Nocke aus, welche unterschiedliche gemittelte Rautiefen R_{z} aufweisen und somit voneinander unterschiedliche Reibwerte erzeugt werden.

Alternativ kann vorgesehen sein, die Nocke über der gesamten Umfangsfläche zu schleifen und zu polieren, wobei nach der Politur partiell die Umfangsfläche im Bereich des Rückhubabschnittes mittels eines wiederholten Schleifverfahrens erneut aufgeraut wird. Zur Schleifbearbeitung der Umfangsfläche der Nocke sind verschiedene Schleifverfahren anwendbar, wobei ein Außenrundschleifverfahren eine standardmäßige Schleifbearbeitung der Umfangsfläche darstellt. Die sich auf der Oberfläche der Nocke ausbildende Schleifstruktur bildet sich bei Anwendung dieses Verfahrens ebenfalls in Umfangsrichtung aus, so dass ein erzielbarer Reibwert zwischen der Druckrolle und der Nocke in Umfangsrichtung vergleichsweise niedrig ausfällt. Somit kann vorgesehen sein, dass das Schleifverfahren zur Bearbeitung der Umfangsfläche im Arbeitshubabschnitt zunächst ein Außenrundschleifverfahren umfasst. Nachfolgend wird ein Polierverfahren vorgenommen, bei dem jedoch der Rückhubabschnitt ausgenommen wird. Die Schleifoberfläche verbleibt auf dem Rückhubabschnitt, wohingegen der Arbeitshubabschnitt eine polierte Oberfläche erhält.

Eine weitere Verbesserung der vorgesehen Erfindung umfasst ein Schleifverfahren zur Bearbeitung der Umfangsfläche im Rückhubabschnitt, wobei das Schleifverfahren eine Schleifrichtung parallel zur Nockenwellenlängsachse betrifft. Die Oberflächenstruktur durch die Schleifbearbeitung ist damit ebenfalls an der Nockenwellelängsachse ausgerichtet, so dass in Umfangsrichtung eine Erhöhung der Reibung zwischen Druckrolle und der Nocke erzielt werden kann. Die erhöhte Reibung beruht auf der in Umfangsrichtung wirkenden Reibkraft der Druckrolle relativ zur Oberfläche der Nocke, wobei die Schleifstruktur hingegen in Längsrichtung ausgebildet ist. Die schleiftypische Mikrostruktur der Oberfläche weist somit in Schleifrichtung einen geringeren Reibwert auf als senkrecht zur Schleifrichtung. Solange die Schleifrichtung senkrecht zur Wälzbewegung der Druckrolle über der Umfangsfläche der Nocke ausgerichtet ist, wird auf diese Weise ein möglicher Schlupf der Druckrolle über der Nocke minimiert.

Weitere Möglichkeiten in der Erzeugung unterschiedlicher Reibwerte über verschiedenen Abschnitten der Nocke können in Beschichtungsverfahren, in Ätzverfahren, in Rändelverfahren oder ähnlichen Verfahren gesehen werden, mittels derer die Rauhigkeit der Oberfläche von einer Schleifstruktur entweder erhalten bleibt oder in die geschliffene bzw. polierte Oberfläche als Endbearbeitung eingebracht wird. Betreffend das Ätzverfahren kann vorgesehen sein, insbesondere den Rückhubabschnitt anzuätzen, um einen erhöhten Reibwert zu erzielen. Eine Oberflächenbeschichtung, welche eine geringere Rautiefe aufweist als die Grundfläche der Beschichtung, kann für den Arbeitshubabschnitt vorgesehen sein, so dass der Rückhubschnittabschnitt nicht beschichtet wird.

Der Rückhubabschnitt und der Arbeitshubabschnitt können sich jeweils 180° um eine gegenüberstehende Hälfte einer symmetrischen Nocke erstrecken, wobei die Abschnitte des Rückhubs und des Arbeitshubes auch nur auf Teilsegmente des Umfangs einer Nocke beschränkt sein können, und übrige Segmente benachbart zum Rückhubabschnitt ebenfalls den Oberflächenwerten des Arbeitshubabschnittes entsprechen können.

Weitere, die Erfindung verbessernde Maßnahmen werden nachstehend gemeinsam mit der Beschreibung bevorzugter Ausführungsbeispiele der Erfindung anhand der Figuren näher dargestellt.

### Ausführungsbeispiele

Es zeigt:
- Figur 1: eine Ansicht einer Nocke sowie einer Druckrolle im Querschnitt der Nockenwelle, wobei die Druckrolle in Kontakt mit dem Rückhubabschnitt steht;
- Figur 2: eine Ansicht einer Nocke sowie einer Druckrolle im Querschnitt der Nockenwelle, wobei die Druckrolle in Kontakt mit dem Arbeitshubabschnitt steht;
- Figur 3: eine Seitenansicht einer Nockenwelle mit einer in dieser ausgebildeten Nocke, wobei die Nocke mit einer Druckrolle in Kontakt gebracht ist;
- Figur 4: eine schematische Darstellung des Querschnitts einer alternativen Ausführungsform einer Nocke, welche mit einer Druckrolle in Kontakt gebracht ist; und
- Figur 5: eine schematische Darstellung eines Querschnitts einer Nockenwelle mit einer Doppelnocke, welche als Ellipse ausgebildet ist.

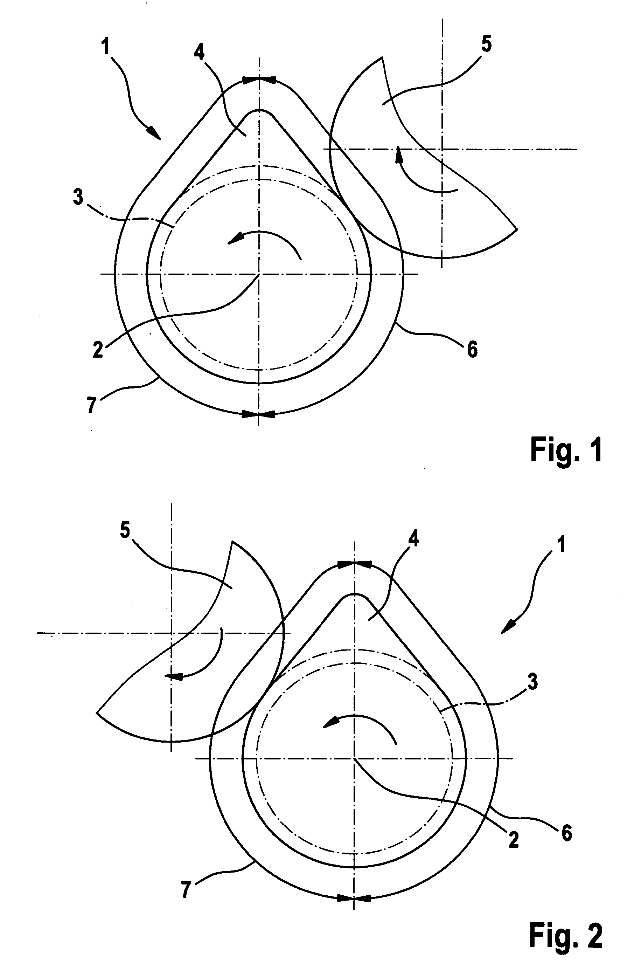

In den Figuren 1 und 2 ist der Nockenwellentrieb mit dem Bezugszeichen 1 versehen. Dieser umfasst eine Nockenwelle 3, welche um eine Nockenwellenlängsachse 2 rotiert. In der Nockenwelle 3 ist eine mit dem Bezugszeichen 4 bezeichnete Nocke eingebracht, wobei die Nocke 4 mit der Nockenwelle 3 ebenfalls um die Nockenwellenlängsachse 2 rotiert. Die Richtung der Rotation ist mittels eines um die Nockenwellenlängsachse 2 dargestellten Pfeils angedeutet. Die Nocke 4 geht einteilig in den Bereich des Querschnitts der Nockenwelle 3 über, wobei die Nockenwelle 3 und die Nocke 4 eine gemeinsame Umfangsfläche bilden, über die eine Druckrolle 5 abwälzt. Die Druckrolle 5 ist über - nicht näher dargestellte - Druckvorrichtungen gegen die Umfangsfläche der Nocke 4 angedrückt. Aufgrund der Berührung der Druckrolle 5 an der Umfangsfläche der Nocke 4 wird die Druckrolle 5 ebenfalls in Rotation versetzt, wobei die Rotationsrichtung der Druckrolle 5 in den Figuren ebenfalls mittels eines Pfeils dargestellt ist.

Die Druckrolle 5 ist mittels einer -nicht näher dargestellten- Aufnahme hubbeweglich geführt, wobei die Hubbewegung die Druckrolle von der Nockenwellenlängsachse 2 wegführt, bzw. zu dieser hinführt. Die Umfangsfläche der Nocke 4 bzw. der Nockenwelle 3 ist unterteilbar in einen Rückhubabschnitt 6 sowie in einen Arbeitshubabschnitt 7. Gemäß der Darstellung in Figur 1 berührt die Druckrolle 5 die Nocke 4 im Bereich des Rückhubabschnitts 6, wohingegen in der Darstellung in Figur 2 die Druckrolle 5 die Nocke 4 im Bereich des Arbeitshubabschnittes 7 berührt. Gemäß der vorgegebenen Rotationsrichtung der Nocke 4 wird die Druckrolle 5 zur Nockenwellenlängsachse 2 gemäß der Darstellung in Figur 1 hinbewegt, da die Druckrolle im Bereich des Rückhubabschnitts 6 im Abwärtsbereich der Nocke 4 mit dieser in Kontakt steht.

Gemäß der Darstellung in Figur 2 steht die Druckrolle 5 im Bereich des Arbeitshubabschnittes 7 mit der Nocke 4 in Kontakt, so dass sich die Druckrolle 5 mit der Rotation der Nocke 4 von der Nockenwellenlängsachse 2 wegbewegt. Die jeweilige Bewegung der Druckrolle 5 ist mit einem Doppelpfeil in den Figuren 1 und 2 angedeutet. Die Darstellungen der Abschnitte des Rückhubes 6 und des Arbeitshubes 7 über dem Umfang der Nocke 4 sind lediglich schematisch zu verstehen, wobei der jeweilige Abschnitt auch nur auf die Nocke selbst begrenzt sein kann, und den übrigen Abschnitt des Umfangs über der Nockenwelle 3 nicht betrifft. Jedenfalls ist erfindungsgemäß vorgesehen, dass im Bereich des Rückhubabschnittes 6 ein erhöhter Reibwert der Umfangsfläche vorgesehen ist, wohingegen der Reibwert im Bereich des Arbeitshubabschnittes 7 vergleichsweise gering ausfällt. Die unterschiedlichen Reibwerte im Bereich des Rückhubabschnittes 6 im Vergleich zum Arbeitshubabschnitt 7 wird verursacht durch eine unterschiedlichte gemittelte Rautiefe R_{z} bzw. analog zu dieser technischen Größe durch einen hohen Materialanteil M_{R} der Oberfläche. Folgt man der Drehbewegung der Nockenwelle 3 gemäß der Darstellungen in Figur 1 und 2, so bewegt sich gemäß Figur 1 die Druckrolle 5 über dem Rückhubabschnitt 6, und wird mit einer geringen Kraft an die Umfangsfläche der Nocke 4 angedrückt. Aufgrund der großen gemittelten Rautiefe R_{z} im Bereich des Rückhubabschnittes 6 wird eine große Reibung zwischen der Nocke 4 und der Druckrolle 5 erzeugt, so dass trotz der geringen Anpresskraft die Druckrolle 5 auf der Nocke 4 ohne Schlupf abwälzt. Gemäß der Darstellung in der Figur 2 wälzt die Druckrolle 5 im Bereich des Arbeitshubabschnittes 7 auf der Nocke 4 ab, wobei eine geringe Rautiefe eine verschleißminimale Kontaktierung der Druckrolle 5 mit der Nocke 4 ermöglicht.

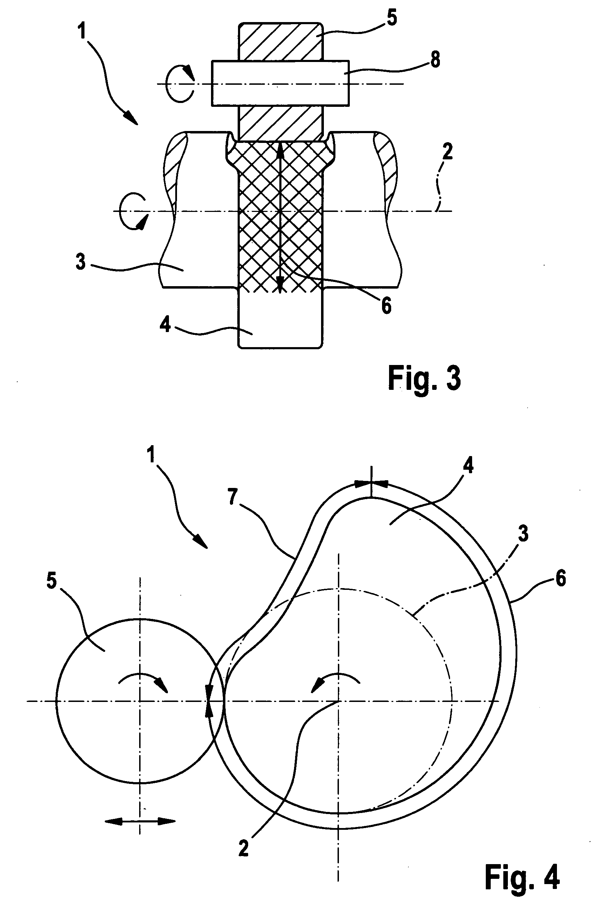

In Figur 3 ist ein weiteres Ausführungsbeispiel eines Nockenwellentriebes 1 gezeigt, wobei eine Nocke 4 innerhalb einer Nockenwelle 3 ausgebildet ist, welche um eine längs dargestellte Nockenwellenlängsachse 2 rotiert. Eine Druckrolle 5 ist mit der Oberfläche der Nocke 4 in Kontakt gebracht, wobei die Druckrolle 5 mittels eines Rollenbolzens 8 drehbar gelagert ist. Der Bereich des Rückhubabschnittes 6 ist mittels einer Kreuzschraffur dargestellt, welche lediglich den aufgerauten Bereich des Rückhubabschnittes 6 wiedergeben soll. Gemäß der Erstreckung des aufgerauten Bereichs des Rückhubabschnittes 6 überläuft dieser nicht den halben Umfang der Nocke 4, sondern nur einen Teilbereich des Halbschnittes der Nocke. Der übrige Bereich entspricht somit der Oberflächenqualität des Arbeitshubabschnittes 7.

Figur 4 zeigt ein alternatives Ausführungsbeispiel einer Kontur einer Nocke 4, welche an einer Nockenwelle 3 drehbar um eine Nockenwellenlängsachse 2 ausgeführt ist. Gemeinsam mit der Druckrolle 5 bildet die Darstellung den Nockenwellentrieb 1, wobei die Hubbewegung über dem Umfang der Nocke 4 nicht als harmonische Bewegung beschreibbar ist, da die Nocke 4 eine asymmetrische Ausbildung umfasst. Der Arbeitshubabschnitt 7 erstreckt sich um einen ersten Bereich des Umfangs der Nocke 4, wobei der übrige Bereich als Rückhubabschnitt 6 dargestellt ist. Gemäß dieser Darstellung ist der Bereich der hohen Oberflächenqualität, welche gekennzeichnet ist durch eine sehr geringe gemittelte Rautiefe R_{z} und einen hohen Traganteil M_{R}, nur über einen kleinen Teilbereich des Umfangs vorgesehen. Der größere Teilbereich des Rückhubabschnittes 6 bedarf einer vergleichsweise hohen Rautiefe, so dass ein Schlupf der Druckrolle 5 effektiv vermieden werden kann.

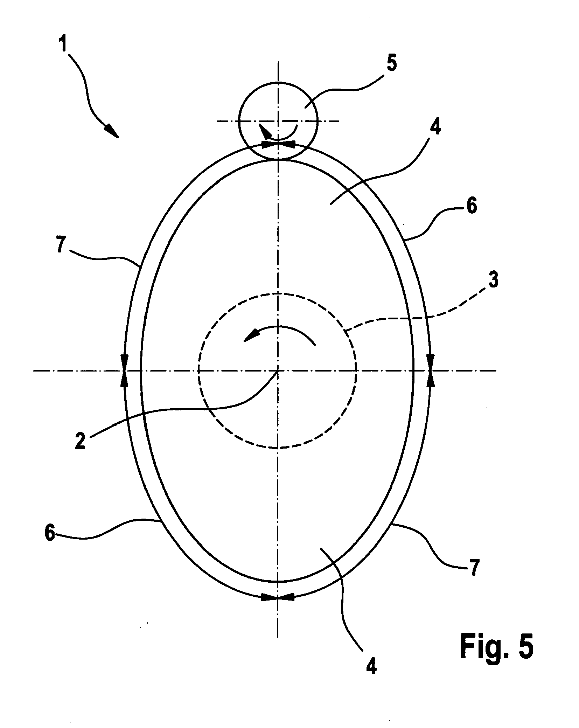

Figur 5 zeigt ein weiteres Ausführungsbeispiel eines Nockenwellentriebes 1. Auf der um die Nockenwellenlängsachse 2 drehbar gelagerten Nockenwelle 3 ist eine ellipsenförmige Kontur angeformt, welche eine erste und eine zweite Nocke 4 umfasst. Die Nocken 4 sind auf einem jeweils 180° zueinander versetzten Winkelabschnitt angeordnet, so dass die Druckrolle 5 mit einer einzigen Umdrehung der Nockenwelle 4 zwei Hubbewegungen ausführt. Somit sind über dem Umfang der Nocken 4 zwei Rückhubabschnitte und zwei Arbeitshubabschnitte ausgebildet, welche sich über dem Umfang jeweils aufeinanderfolgend erstrecken. Auch gemäß dieses Ausführungsbeispiels eines Nockenwellentriebes 1 umfassen die Rückhubabschnitte 6 jeweils große gemittelte Rautiefen R_{z}, wohingegen die Arbeitshubabschnitte 7 vergleichsweise geringe gemittelte Rautiefen R_{z} aufweisen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Somit ist der Nockenwellentrieb nicht auf die Verwendung für Dieseleinspritzpumpen begrenzt, sondern umfasst alle Nockenwellentriebe, welche auf dem Prinzip einer über eine Nocke 4 abwälzende Druckrolle 5 beruhen. Die jeweilige Erstreckung eines Rückhubabschnittes 6 und eines Arbeitshubabschnittes 7 ist nicht auf die jeweils halbe Umfangsfläche der Nocke 4 beschränkt, sondern kann Teilbereiche umfassen, welche über dem Umfang der Nocke 4 verschiedenartig aufgeteilt sein können.

## Patentansprüche

1. Nockenwellentrieb (1), insbesondere für eine Dieseleinspritzpumpe, mit einer um eine Nockenwellenlängsachse (2) rotierenden Nockenwelle (3), wobei diese wenigstens eine Nocke (4) umfasst, die mit einer hubbeweglich geführten Druckrolle (5) zusammenwirkt, welche auf der Umfangsfläche der Nocke (4) abwälzt, wobei die Hubbewegung der Druckrolle (5) einen Arbeitshub umfasst, in welchem sich diese von der Nockenwellenlängsachse (2) wegbewegt, und ferner einen Rückhub umfasst, in welchem sich diese zur Nockenwellenlängsachse (2) hinbewegt,
**dadurch gekennzeichnet, dass** die Umfangsfläche der Nocke (4) einen Rückhubabschnitt (6) aufweist, auf welchem die Druckrolle (5) im Rückhub abwälzt und ferner einen Arbeitshubabschnitt (7) aufweist, auf welchem die Druckrolle (5) im Arbeitshub abwälzt, wobei die Umfangsfläche über dem Rückhubabschnitt (6) der Nocke (4) einen größeren Reibwert als über dem Arbeitshubabschnitt (7) aufweist.

2. Nockenwellentrieb (1) nach Anspruch 1,
**dadurch gekennzeichnet, dass** die gemittelte Rautiefe R_{z} des Rückhubabschnittes (6) wenigstens einen Wert von 2µm bis 8µm, vorzugsweise von 3µm bis 6µm und besonders bevorzugt von wenigstens 4µm aufweist.

3. Nockenwellentrieb (1) nach Anspruch 1 oder 2,
**dadurch gekennzeichnet, dass** die gemittelte Rautiefe R_{z} des Arbeitshubabschnittes (7) einen Wert von 0,1µm bis 2,5µm, vorzugsweise von 0,5µm bis 2,2µm und besonders bevorzugt von maximal 2µm aufweist.

4. Nockenwellentrieb (1) nach einem der vorgenannten Ansprüche,
**dadurch gekennzeichnet, dass** der Materialanteil Mᵣ des Rückhubabschnittes (6) einen Wert von 5% bis 30%, vorzugsweise von 10% bis 25% und besonders bevorzugt nicht mehr als 20% umfasst.

5. Nockenwellentrieb (1) nach einem der vorgenannten Ansprüche,
**dadurch gekennzeichnet, dass** der Materialanteil Mᵣ des Arbeitshubabschnittes (6) einen Wert von 20% bis 95%, vorzugsweise von 50% bis 90% und besonders bevorzugt wenigstens 80% umfasst.

6. Nockenwellentrieb (1) nach einem der vorgenannten Ansprüche,
**dadurch gekennzeichnet, dass** die Umfangsfläche der Nocke (4) wenigstens teilweise eine mittels eines Schleifverfahrens hergestellte Oberfläche umfasst.

7. Nockenwellentrieb (1) nach einem der Ansprüche 1 bis 5,
**dadurch gekennzeichnet, dass** die Umfangsfläche der Nocke (4) wenigstens teilweise eine mittels eines Polierverfahrens hergestellte Oberfläche umfasst.

8. Nockenwellentrieb (1) nach Anspruch 7,
**dadurch gekennzeichnet, dass** die polierte Oberfläche auf den Bereich des Arbeitshubabschnittes (7) begrenzt ist.

9. Nockenwellentrieb (1) nach einem der Ansprüche 6 bis 8,
**dadurch gekennzeichnet, dass** das Schleifverfahren zur Bearbeitung der Umfangsfläche im Arbeitshubabschnitt (7) ein Außenrundschleifverfahren umfasst.

10. Nockenwellentrieb (1) nach einem der vorgenannten Ansprüche,
**dadurch gekennzeichnet, dass** das Schleifverfahren zur Bearbeitung der Umfangsfläche im Rückhubabschnitt (6) eine Schleifrichtung parallel zur Nockenwellenlängsachse (2) umfasst.

## Claims

1. Camshaft drive (1), in particular for a diesel injection pump, having a camshaft (3) which rotates about a camshaft longitudinal axis (2) and which comprises at least one cam (4) which interacts with a thrust roller (5) which is guided in a stroke-movable fashion and rolls on the circumferential surface of the cam (4), with the stroke movement of the thrust roller (5) comprising a working stroke, during which said thrust roller (5) moves away from the camshaft longitudinal axis (2), and also a return stroke, during which said thrust roller (5) moves towards the camshaft longitudinal axis (2),
**characterized in that** the circumferential surface of the cam (4) has a return stroke section (6) on which the thrust roller (5) rolls during the return stroke, and also a working stroke section (7) on which the thrust roller (5) rolls during the working stroke, with the circumferential surface having a higher coefficient of friction over the return stroke section (6) of the cam (4) than over the working stroke section (7).

2. Camshaft drive (1) according to Claim 1,
**characterized in that** the average roughness depth R_{z} of the return stroke section (6) has at least a value of 2 µm to 8 µm, preferably of 3 µm to 6 µm, and particularly preferably of at least 4 µm.

3. Camshaft drive (1) according to Claim 1 or 2, **characterized in that** the average roughness depth R_{z} of the working stroke section (7) has a value of 0.1 µm to 2.5 µm, preferably of 0.5 µm to 2.2 µm and particularly preferably of at most 2 µm.

4. Camshaft drive (1) according to one of the preceding claims,
**characterized in that** the material proportion Mᵣ of the return stroke section (6) comprises a value of 5% to 30%, preferably of 10% to 25% and particularly preferably of no more than 20%.

5. Camshaft drive (1) according to one of the preceding claims,
**characterized in that** the material proportion Mᵣ of the working stroke section (7) comprises a value of 20% to 95%, preferably of 50% to 90% and particularly preferably of at least 80%.

6. Camshaft drive (1) according to one of the preceding claims,
**characterized in that** the circumferential surface of the cam (4) at least partially comprises a surface produced by means of a grinding process.

7. Camshaft drive (1) according to one of Claims 1 to 5, **characterized in that** the circumferential surface of the cam (4) at least partially comprises a surface produced by means of a polishing process.

8. Camshaft drive (1) according to Claim 7, **characterized in that** the polished surface is restricted to the region of the working stroke section (7).

9. Camshaft drive (1) according to one of Claims 6 to 8,
**characterized in that** the grinding process for machining the circumferential surface in the working stroke section (7) comprises an external cylindrical grinding process.

10. Camshaft drive (1) according to one of the preceding claims,
**characterized in that** the grinding process for machining the circumferential surface in the return stroke section (6) comprises a grinding direction parallel to the camshaft longitudinal axis (2).

## Revendications

1. Entraînement d'arbre à came (1), en particulier pour une pompe d'injection de diesel, comprenant un arbre à came (3) tournant autour d'un axe longitudinal d'arbre à came (2), celui-ci comprenant au moins une came (4) qui coopère avec un galet de pression (5) guidé de manière déplaçable suivant un mouvement de course, qui roule sur la surface périphérique de la came (4), le mouvement de course du galet de pression (5) comprenant une course de travail dans laquelle celui-ci se déplace à l'écart de l'axe longitudinal de l'arbre à came (2), et comprenant en outre une course de retour, dans laquelle celui-ci se déplace en direction de l'axe longitudinal de l'arbre à came (2),
**caractérisé en ce que** la surface périphérique de la came (4) présente une portion de course de retour (6) sur laquelle le galet de pression (5) roule dans la course de retour, et présente en outre une portion de course de travail (7) sur laquelle le galet de pression (5) roule dans la course de travail, la surface périphérique présentant sur la portion de course de retour (6) de la came (4) un plus grand coefficient de friction que sur la portion de course de travail (7).

2. Entraînement d'arbre à came (1) selon la revendication 1,
**caractérisé en ce que** la profondeur de rugosité moyennée R_{z} de la portion de course de retour (6) présente au moins une valeur de 2 µm à 8 µm, de préférence de 3 µm à 6 µm et particulièrement préférablement d'au moins 4 µm.

3. Entraînement d'arbre à came (1) selon la revendication 1 ou 2,
**caractérisé en ce que** la profondeur de rugosité moyennée R_{z} de la portion de course de travail (7) présente une valeur de 0,1 µm à 2,5 µm, de préférence de 0,5 µm à 2,2 µm, et particulièrement préférablement de 2 µm au maximum.

4. Entraînement d'arbre à came (1) selon l'une quelconque des revendications précédentes,
**caractérisé en ce que** la proportion de matériau Mᵣ de la portion de course de retour (6) inclut une valeur de 5% à 30%, de préférence de 10% à 25%, et particulièrement préférablement une valeur ne dépassant pas 20%.

5. Entraînement d'arbre à came (1) selon l'une quelconque des revendications précédentes,
**caractérisé en ce que** la proportion de matériau Mᵣ de la portion de course de travail (6) inclut une valeur de 20% à 95%, de préférence de 50% à 90%, et particulièrement préférablement d'au moins 80%.

6. Entraînement d'arbre à came (1) selon l'une quelconque des revendications précédentes,
**caractérisé en ce que** la surface périphérique de la came (4) comprend au moins en partie une surface fabriquée au moyen d'un procédé de meulage.

7. Entraînement d'arbre à came (1) selon l'une quelconque des revendications 1 à 5,
**caractérisé en ce que** la surface périphérique de la came (4) comprend au moins en partie une surface fabriquée au moyen d'un procédé de polissage.

8. Entraînement d'arbre à came (1) selon la revendication 7,
**caractérisé en ce que** la surface polie est limitée à la région de la portion de course de travail (7).

9. Entraînement d'arbre à came (1) selon l'une quelconque des revendications 6 à 8,
**caractérisé en ce que** le procédé de meulage pour l'usinage de la surface périphérique dans la portion de course de travail (7) comprend un procédé de rectification des surfaces extérieures cylindriques.

10. Entraînement d'arbre à came (1) selon l'une quelconque des revendications précédentes,
**caractérisé en ce que** le procédé de meulage pour l'usinage de la surface périphérique dans la portion de course de retour (6) comprend une direction de meulage parallèle à l'axe longitudinal de l'arbre à came (2).
